Europäisches Patentamt

(19) European Patent Office

Office européen des brevets

(11) Publication number: **0 027 433**
**B1**

(12) **EUROPEAN PATENT SPECIFICATION**

(45) Date of publication of patent specification: **20.07.83**

(51) Int. Cl.³: **B 23 Q 7/04, B 21 D 43/00**

(21) Application number: **80830079.2**

(22) Date of filing: **08.10.80**

(54) Device for transferring pieces, in particular metal keys, from a first infeed station to a second operating and discharge station placed angularly with respect to the former, and vice versa.

(30) Priority: **10.10.79 IT 350279**

(43) Date of publication of application:
**22.04.81 Bulletin 81/16**

(45) Publication of the grant of the patent:
**20.07.83 Bulletin 83/29**

(84) Designated Contracting States:
**AT BE DE FR GB NL**

(56) References cited:
**DE - A - 2 630 858**
**DE - C - 602 138**
**US - A - 1 993 754**
**US - A - 3 080 840**
**US - A - 3 116 665**
**US - A - 3 189 193**

(73) Proprietor: **T. GIULIANI S.p.A.**
**Via del Lavoro, 7**
**I-40127 Quarto Inferiore (Bologna) (IT)**

(72) Inventor: **Giuliani, Tonino**
**Via Calda, 5**
**I-40135 Bologna (IT)**

(74) Representative: **Pederzini, Paolo**
**BUGNION S.p.A. Via Farini n. 37**
**I-40124 Bologna (IT)**

Courier Press, Leamington Spa, England

Device for transferring pieces, in particular metal keys, from a first infeed station to a second operating and discharge station placed angularly with respect to the former, and vice versa

The invention relates to a device for transferring pieces, in particular metal keys, from a first infeed station to a second operating and discharge station placed angularly with respect to the former, and vice versa.

For transferring articles or pieces from one work station to another work station, angularly separated therebetween, is known, i.e. from the US patent 3 189 193, the use of suction-grippipng means supported by a transfer arm which moves through an angle of 90°. Said arm is mounted on a vertical shaft supported by a column member and connected, by a crank arm and a cam follower roller, to a cam driven in motion by a motorized shaft, provided to rotate said vertical shaft in successive time in clockwise and in anticlockwise direction.

On the ground of said known art the Applicant has studied a simple and functional device object of the present invention for transferring in automatic fashion pieces, in particular metal keys, from a first infeed station to a second operating and discharge station angularly separated from the infeed station.

The device object of the present invention comprises a turret, supported by a frame, and comprises a tubular member able to rotate about an axis perpendicular to the transfer plane of the said keys, inside which tubular member is located a shaft, rotatable by an operating system, and to the upper extremity of which is keyed a gear wheel that meshes with a slidable rack; a carriage, connected to the rack and movable along a longitudinal support guide integral with the said tubular member and on which are integrally located buffer elements that define the travel limits for the rack, the said carriage being movable between two extreme positions, corresponding to the travel limits of the rack, namely, a position of maximum radial retraction in which in use a clamping device, placed on the radially outward extremity of the said carriage, withdraws the said key from the said infeed station, and a position of maximum radial advancement in which in use the said key is transferred into the region of the said operating and discharge station, at which station the said carriage in use again adopts the said position of maximum radial retraction in order to send the said key to an expulsion chute once the clamping device has opened, the said tubular member being connected to the said frame by an elastic device that supplies sufficient torque to the said longitudinal support to allow it to rotate from the said first to the said second station, in harmony with and at the same time as the rotation in the same angular direction, of the said gear wheel whose total angle of rotation, in one of the two directions, is identical to the sum of the angle of rotation required for the said longitudional support to be carried from one of the said stations to the other, and of the angle of rotation required for the said carriage to be carried from one of the said extreme positions to the other.

Further characteristics of the invention will become more apparent from the detailed description that follows of one preferred but not sole form of embodiment illustrated purely as an unlimited example on the accompanying drawings, in which:

—Fig. 1 shows, in a perspective view, the device in question;

—Fig. 2 shows, diagrammatically in a plan view, the device shown in Fig. 1, with certain parts removed so that others may be more visible;

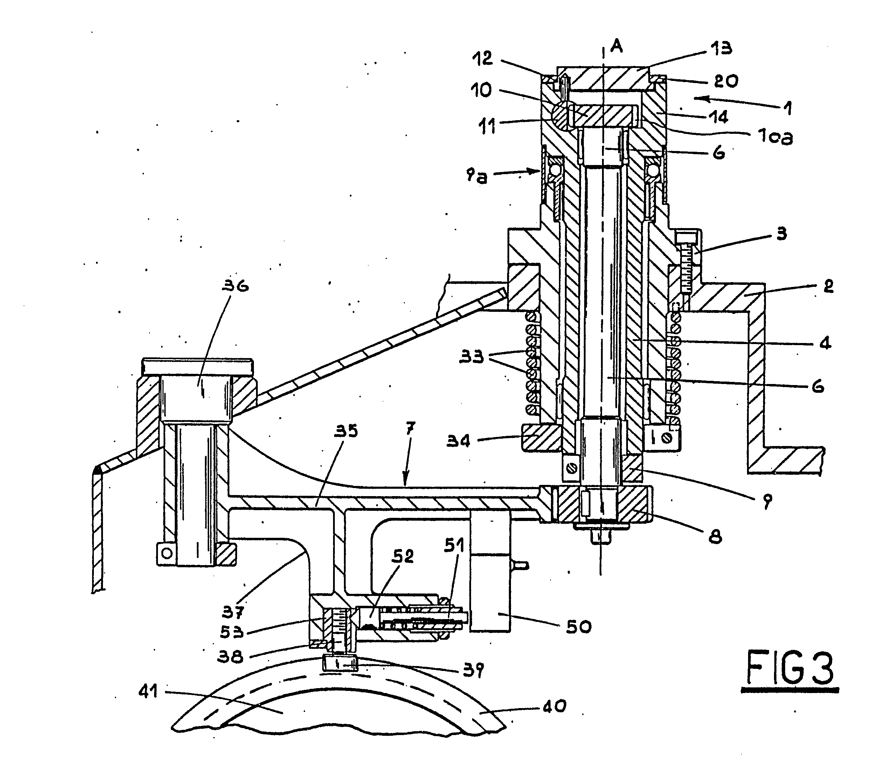

—Fig. 3 shows, diagrammatically in a part vertical section, the device depicted in Fig. 2, along the line 3—3;

—Figs. 4, 5, 6, 7, 8 and 9 show, diagrammatically, the various movement phases followed by the carriage of the device in question and by its support during the passage from the operating and discharge station to the infeed station and vice versa.

With reference to the above mentioned figures, the device in question comprises a turret (1), supported by the frame (2) through a flange (3), comprising a tubular member (4) able to rotate around an axis (A) perpendicular to the transfer plane of each key (5). Inside the tubular member (4) is placed a shaft (6), carried in rotation by an operating system (7), that exerts an effect on a pinion (8) keyed along the lower extremity of the said shaft (6).

The lower part of the tubular member (4) is supported by means of a bush (9), and the upper part by a thrust bearing (9a) sustained by the flange (3). The upper extremity of the shaft (6) had keyed to it a gear wheel (10) that meshes with a rack (11) connected integrally, by means of a pin (12), to a carriage (13) overhead, movable along a longitudinal support guide (14) which is nothing more than an upper extension to the tubular member (4). The rack (11) is able to slide inside the longitudinal support (14) in which are also positioned the buffer elements (15) and (16) provided to define the travel limits for the rack (11) pertinent to the position of maximum retraction and maximum advancement, respectively, of the carriage (13).

The said carriage (13) is provided with a clamping device (17), placed on the front extremity thereof, constituted by a stationary gripper (17a) and by a movable gripper (17b), able to rotate around the fulcrum (18) in such a way as to determine the clamping or the release or the key (5). The said grippers extend essentially along planes coincident with the transfer plane of the key (5) so that the clamping is effected on the lateral borders of the said key (5). The rotation of the movable gripper (17b) takes place through a rocker arm (19), pivotally connected to the upper border (20) of the longitudinal support (14), making pressing contact with the said gripper (17b), on one side or the other with respect to the fulcrum (18), depending on whether the key (5) is to be clamped or released.

The rocker arm (19) is subjected to the action of a spring (21) placed in the region of the extremity of the lower stem (19a) of the rocker arm (19), reacting with a force directed towards the outside of the vertical border of the support (14) in such a way that, in the static position, the rocker arm (19) maintains the movable gripper (17b) in the clamping position. To obtain the release of the movable gripper (17b), it is necessary to take action on the stem (19a) with a force directed towards the inside of the support (14). For this purpose provision is made for the operating means (22) and (23), more about which will be said hereinafter, that exert an effect on the stems of the rocker arm (19); the stem (19a) is, in turn, provided with an internal projection (24) that makes pressing contact with the movable gripper (17b).

The clamping device (17), constituted in this way, thus follows all the displacements of the carriage (13), movable between the said position of maximum retraction, in which the clamping device (17) withdraws the key (5) from an infeed station (25), and the said position of maximum advancement, in which the key (5) is transferred to an operating and discharge station (26), during which the carriage (13) again adopts the said position of maximum retraction in order to send the key (5) to an expulsion chute (27) via a hole (28) placed immediately upstream with respect to a machining tool (29). In the case in question, the operating station (26) is placed angularly with respect to the infeed station (25), and exactly at a right angle therewith. During the phases of withdrawing the key (5) from the infeed station (25), of transferring it to the operating station (26) and of machining it with the use of the tool (29), the said key could, because of the constitution of the clamping device (17), free itself therefrom, and thus provision has been made, in the region of the said stations, for corresponding support platforms (30) and (31) for the key (5), while along the arc of a circle defined by the transfer path of the clamping device (17), a platform (32), constructed in the form of a sector, is provided.

At this juncture it is of extreme importance to add that the tubular member (4) is subjected to the action of an elastic device, in the case in question constituted by a spring (33), connected at one extremity to the frame (2) and at the other to the said tubular member (4), via a ring (34) integrally connected to the member (4).

The inclusion of the spring (33) is absolutely vital since it supplies the support (14) with sufficient torque to allow it one complete rotation from the station (25) to the station (26) in harmony with, and at the same time as, the rotation, in the same direction, of the gear wheel (10) whose angle of complete rotation, in one of the two directions, determined by the operating system (7), is identical to the sum of the angle of rotation required for the support (14) to be carried form one of the said stations to the other, and of the angle of rotation required for the carriage (13) to be carried from one of the said extreme positions to the other. In other words, when the support (14) rotates from the station (26) to the station (25), the spring loads and vice versa, its torsional force only comes functionally into play when the support (14) has to rotate from the station (25) to the station (26).

It is, therefore, of great importance that the rotations and the relevant pauses of the gear wheel (10) be calculated perfectly and that they be constant as time goes by. For this purpose, the operating system is constituted by a sector gear (35) that is pivoted at (36) to the frame (2) and meshes with the pinion (8). The lower part of the sector gear (35) has an extension (37) in which is engaged the shank (38) of a roller (39) that lies on a plane parallel to that on which the sector gear (35) lies. The roller (39) slides on the profile (40) of a cam (41) of the rotating disc type that lies on a plane perpendicular to that on which the sector gear (35) lies.

It should be noted that provision has been made for a buffer element (42), placed on the righthand side of the turret (1) and there to define a limit in the rotation of the support (14) in the two directions, this being through a first buffer (43) placed on the inside front of the said element (42), and a second buffer (44), constituted by the outside lateral flank of the said element (42), with which a screw projection (45) placed on the side of the support (14) comes into contact.

The operation of the device in question will now be described.

It should be noted that in the case in question the device forming the subject of the invention is utilized to transfer previously milled keys of the type (5) to said operating station (26) where what is called the "backing" operation is carried out on the key.

The said operation consists in rounding off the back (46) of the key (5) in a way complementary to the outside circumference of the barrel of the lock to which the key is destined. For this to be done, the operating station (26) is provided with a tool (29), in this particular instance a rotating cutter, which is keyed to a shaft (47) that describes an arc of a circle whose radius is that required for the backing. In order, during the said machining operation, that the key (5) is not subjected to vibration, it is held transversely in the grip of a pair of jaws (49) supplementary to the clamping device (17).

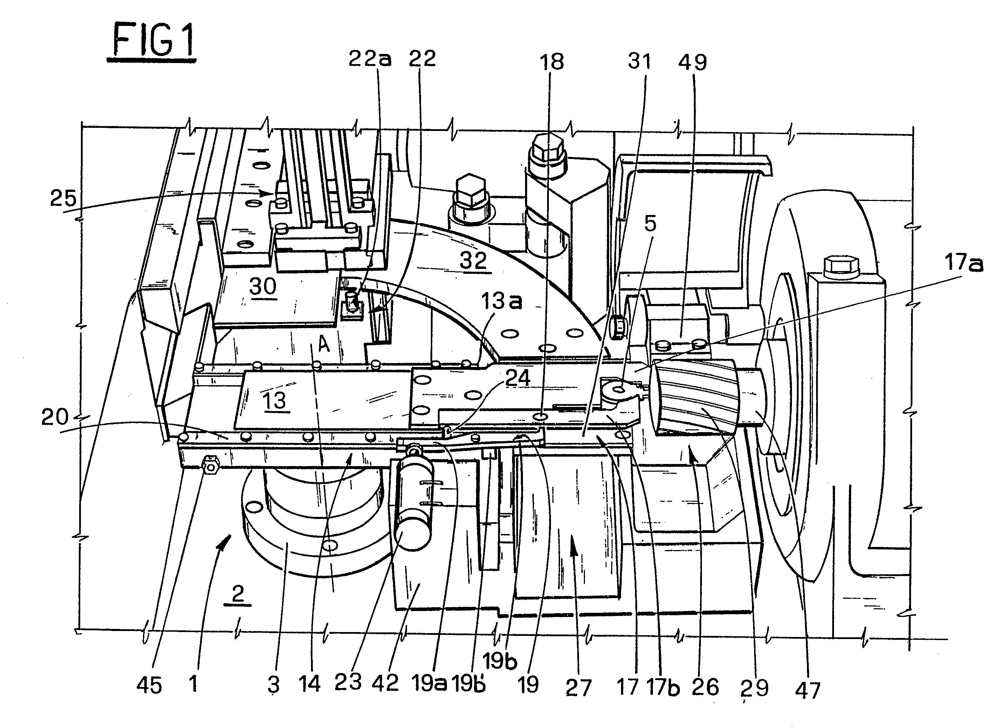

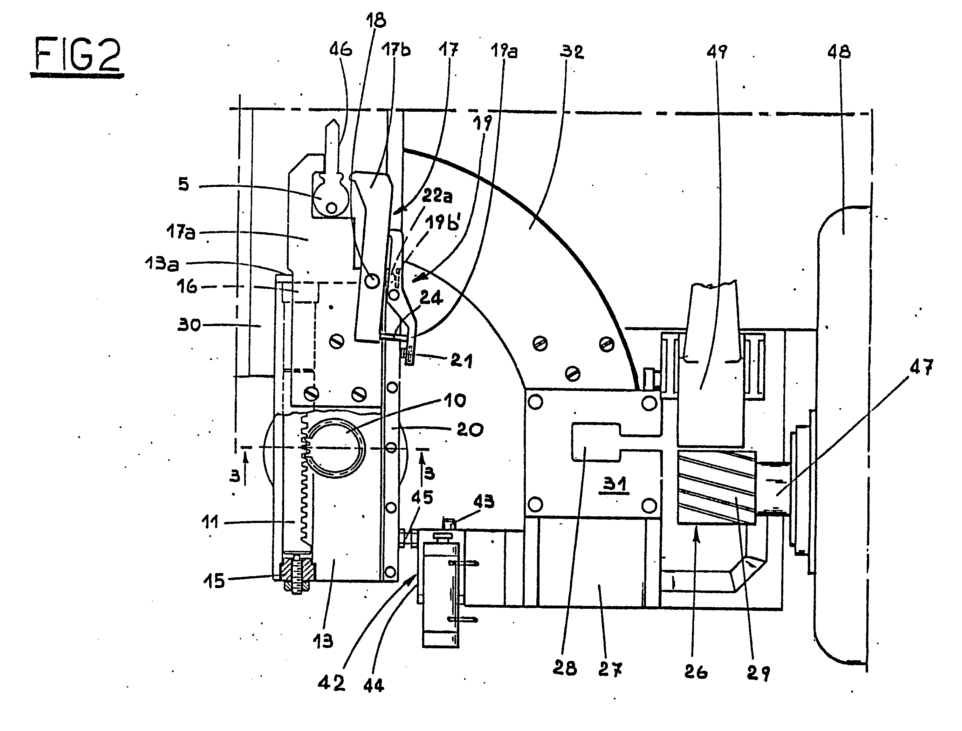

With particular reference to Fig. 1, it should be noted that the said clamping device (17) is controlled by the operating means (22) and (23), the former being placed in proximity of the transfer plane of the key (5), in the region of the infeed station (25), while the latter is placed, for example, above the buffer element (42). For the actuation of the operating means (22), the stem (19b), opposite the stem (19a) of the rocker arm (19) is provided on its lower part with a tab (19b'). The operating means (22) are, in fact, constituted simply by a pin (22a) integral with the frame (2) and positioned at a height almost up to the said transfer plane, provided to locate the tab (196') before the support (14) has reached the vertical position (Fig. 2). The tab (19b'), in the passage of the said support (14) from the horizontal to the vertical position, initially has free transit between the front extremity (13a) of the support (14) and the platform (31) (Fig. 1). The operating means (23) are, instead, constituted by a common pneumatic piston that makes pressing contact transversely along the stem (19a) (Fig. 1).

For the satisfactory operation of the device in question and in order to prevent faults that could be irreparable, provision has been made, furthermore, for a micro proximity switch (50) placed beneath the sector gear (35) and provided to take the device out of operation. The said micro switch (50) is tripped by the displacement of the stem (51) of a wedge shaped member (52) inserted elastically in a hole made in a small carriage (53), in the inside of which is engaged the shank (38) of the roller (39), able to slide vertically with respect to the profile (40) of the cam (41) in the event of the rotation of the support (14) being in some way impeded during the rotation of the sector gear (35).

A description will now be given of the various phases applicable to the device in question, commencing, by way of an example, from the moment when the support (14) is directed towards the infeed station (25) and the carriage (13) is in the position of maximum retraction. At this moment the sector gear (35) is immobile and the movable gripper (17b) is open since the rocker arm (19) is subjected to the action of the operating means (22). The infeed station (25) supplies a key (5) to the inside of the clamping device (17), and subsequently the movable gripper (17b) closes.

Because of the rotation of the cam (41) the roller (39) is displaced in a horizontal plane and this brings about an anti-clockwise rotation of the sector gear (35) and a clockwise rotation of the gear wheel (10). Contemporaneously, since in the said situation the spring (33) is under tension supplying a torque to the support (14) in the said clockwise direction, before the rack (11) starts to be displaced, the support (14) rotates at a right angle until it comes into contact with the buffer (43).

At the same time, the gear wheel (10) has also rotated at a right angle. At the said moment, with the rotation of the gear wheel (10) continuing, the rack (11) starts to be displaced until it arrives in contact with the buffer element (16) and this determines the forward movement of the carriage (13) which is thus passed from the position of maximum retraction to that of maximum advancement. At the same time the sector gear (35) halts and the operation of "backing" the key (5) commences; once this has ended, the cam (41) places anew the sector gear (35) in rotation in a clockwise direction, that is to say, in the reverse direction to that in which it was rotated previously.

The spring (33), now not loaded, does not in any way influence the support (14) and thus the anti-clockwise rotation of the gear wheel (10) initially carries in movement only the rack (11), until the carriage (13) has returned to its position of maximum retraction. Once, therefore, the rack (11) comes into contact with the buffer element (15), with the anti-clockwise rotation of the gear wheel (10) continuing and since the buffer element (15) is integral with the support (14), a torque is created, with respect to the axis (A), defined by the product of the force aplied to the crown gear (10a) of the gear wheel (10) because of the radius thereof, which brings about the rotation of the support (14) in the said anti-clockwise direction up until the rotation of the gear wheel (10) ceases, when the support (14) comes into contact, through the screw projection (45), with the buffer element (44).

At the said moment, the sector gear (35) halts and a fresh cycle is commenced. It should be noted that the profile (40) of the cam (41) is so shaped that during the continuous rotation of the latter, the sector gear (35) undergoes alternate rotations and pauses until the rotation has been completed in one direction or the other.

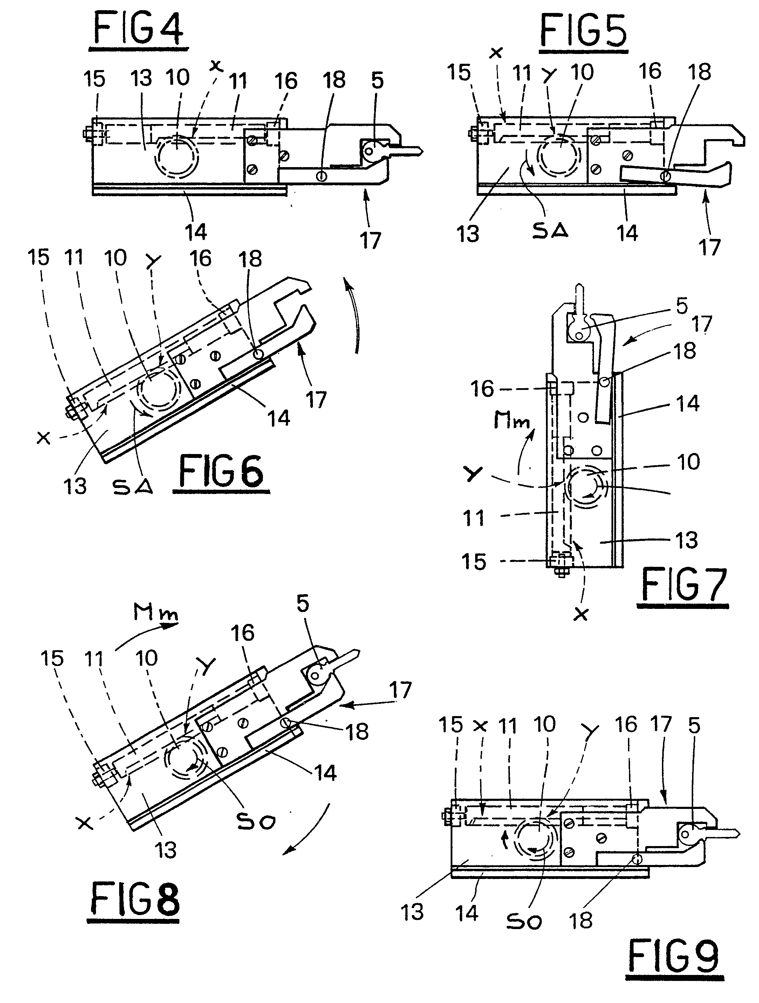

The phases of rotation of the support (14) and of displacement of the rack (11) (and thus of the carriage (13)) are shown in Figs. 4, 5, 6, 7, 8 and 9. The support (14) is shown diagrammatically in Fig. 4 in the horizontal working position with the carriage in the position of maximum advancement at the moment when the carriage (13) starts to move backwards. The contact area between the gear wheel (10) and the rack (11) has been shown as (x). Subsequently (Fig. 5), during the rotation of the gear wheel (10) in the anti-clockwise direction (SA), the point (x) is carried to a position corresponding to the maximum retraction of the carriage (13), and in the said situation the contact area between the gear wheel (10) and the rack (11) has been shown as (y).

When the support (14) commences its rotation (Fig. 6), the positon of (x) with respect to (y) remains unvaried, and the said position of one with respect to the other stays constant until the support (14) has returned to the horizontal position (Figs. 7, 8 and 9).

The same applies as regards the carriage (13) which remains in the position of maximum retraction, and this is due to the contribution of the spring (33) which, at the moment when the gear wheel (10) is rotating in the clockwise direction (SO), exerts a maximum torque Mm directed in the direction of rotation (clockwise) of the support (14) (Fig. 7).

Gradually as the support (14) rotates, the torque Mm decreases proportionally (Fig. 8) and dies out completely once the support (14) has returned to the horizontal position (Fig. 9). The continuous rotation of the gear wheel (10) determines, in this last mentioned situation, the subsequent displacement of the carriage (13) from the present position of maximum retraction to that of maximum advancement, with a return to exactly the initial situation (Fig. 4).

The advantages are obvious that are obtained with the device in question, with which it is possible to automatically carry out a number of series machining operations or the transfer of a key from a first station to another placed angularly with respect to the former, with everything being achieved through a constructionally extremely simple and economical device that utilizes one single operating system for the various movements of the displacement elements with which it is provided.

## Claims

1. Device for transferring pieces, in particular metal keys, from a first infeed station to a second operating and discharge station angularly separated from the infeed station, comprising a turret (1) supported by a frame (2) and comprising a tubular member (4) able to rotate about an axis (A) perpendicular to the transfer plane of the said keys, inside which tubular member is located a shaft (6) rotatable by an operating system (7) and to the upper extremity of which is keyed a gear wheel (10) that meshes with a slidable rack (11); a carriage (13) connected to the rack and movable along a longitudinal support guide (14) integral with the said tubular member (4) and on which are integrally located buffer elements (15) and (16) that define the travel limits for the said rack (11), the said carriage (13) being movable between two extreme positions, corresponding to the travel limits of the rack, namely, a position of maximum radial retraction in which use a clamping device (17), placed on the radially outward extremity of the said carriage withdraws the said key (5) from the said infeed station (25), and a position of maximum radial advancement in which in use the said key (5) is transferred into the region of the said operating and discharge station (26), at which station the said carriage (13) in use again adopts the said position of maximum radial retraction in order to send the said key (5) to an expulsion chute (27) once the clamping device (17) has opened, the said tubular member (4) being connected to the said frame by an elastic device that supplies sufficient torque to the said longitudinal support (14) to allow it to rotate from the said first to the said second station, in harmony with and at the same time as the rotation in the same angular direction, of the said gear wheel (10) whose total angle of rotation, in one of the two directions, is identical to the sum of the angle of rotation required for the said longitudinal support (14) to be carried from one of the said stations to the other, and of the angle of rotation required for the said carriage (13) to be carried from one of the said extreme positions to the other.

2. Device according to Claim 1, wherein the said clamping device (17) comprises a stationary gripper (17a) integral with the said carriage (13), and a movable gripper (17b) pivotally connected thereto, provided to lock the said key (5) transversely at its borders, the said grippers extending along planes parallel to the said transfer plane, the said transfer plane being defined by a sustaining platform (32) for the key (5), constructed in the form of a sector that joins the said stations and is placed beneath the said clamping device (17) during the rotation of the said longitudinal support (14) from the said first to the said second station and vice versa.

3. Device according to Claim 1, wherein the said operating system (7) is constituted by a sector gear (35) that is pivoted to the said frame and meshes with a pinion (8) keyed to the lower extremity of the said shaft (6), coupled to an operating cam (41) that causes the sector gear to undergo alternate rotations and pauses.

4. Device according to Claim 3, wherein the profile (40) of the cam (41) lies on a plane perpendicular to that on which the said sector gear (35) lies, the latter having coupled to it a roller (39) that slides on the said profile (40).

5. Device according to Claim 4, comprising a micro proximity switch (50) provided to take the device out of operation, this switch being tripped by the displacement of the stem (51) of a wedge shaped member (52) inserted elastically in a hole made in a small carriage (53), in the inside of which is engaged the shank (38) of the said roller (39), able to slide perpendicular to the plane of the said profile (40) in the event of the rotation of the said longitudinal support (14) being impeded during the rotation of the said sector gear (35).

## Revendications

1. Dispositif de transfert de pièces, notamment de clés en métal, d'une station d'alimentation vers une station de traitement et de déchargement placée angulairement par rapport à la première; ce dispositif comprend une tourelle (1) supportée par une châssis (2), ainsi qu'un élément tubulaire (4) pivotant autour d'un axe (A) perpendiculaire au plan de transfert des clés; un arbre (6) situé à l'intérieur de cet élément tubulaire tourne sous l'action d'un système de commande (7) et à son extrémité supérieure est fixée une roue dentée (10) qui transmet le mouvement à une crémaillère mobile (11); un chariot (13) relié à la crémaillère se déplace le long d'un guide de support longitudinal (14) solidaire avec ledit élément tubulaire (4) et sur lequel se trouvent des éléments de butée (15) et (16) qui représentent les fins de course de ladite crémaillère (11); le dit chariot (13) se déplaçant entre deux positions extrêmes, correspondant au déplacement limite de la crémaillère, à savoir entre une position de recul radial maximum où un dispositif de prise (17), situé radialement sur l'extrémité externe de ce chariot, prélève ladite clé (5) de la station d'alimentation (25) et une position d'avance radiale maximum où ladite clé (5) est transférée dans ladite station de traitement et de déchargement (26); dans cette station, le chariot (13) retourne à sa position de recul maximum de façon à envoyer la clé (5) dans une glissière d'expulsion (27) après l'ouverture des dispositifs de prise (17); l'élément tubulaire (4) étant relié au châssis par un organe élastique qui fournit un moment suffisant au support longitudinal (14) pour lui permettre d'effectuer un mouvement rotatif entre la première et la deuxième station, synchronisé et simultané à la rotation, dans la même direction angulaire, de ladite roue dentée (10) dont l'angle total de rotation, dans l'une ou dans l'autre direction, est égale à la somme entre l'angle de rotation nécessaire au support longitudinal (14) pour aller d'une station à l'autre, et l'angle de rotation nécessaire à ce chariot (13) pour se déplacer entre les deux positions limites.

2. Dispositif selon la revendication 1, où le dispositif de prise (17) est muni d'une pince fixe (17a) solidaire avec le chariot (13) et d'une pince mobile (17b) pivotant sur ce dernier, qui permettent de bloquer ladite clé (5) en la serrant sur ses bords latéraux; ces pinces se trouvent dans le prolongement des plans parallèles audit plan de transfert alors que ce plan de transfert est limité par une plateforme (32) de support de ladite clé (5), en forme d'arc reliant les susdites stations et situé au-dessous de ce dispositif de prise (7) pendant la rotation du support longitudinal (14) lorsqu'il se déplace dans un sens ou dans l'autre enter les deux stations.

3. Dispositif selon la revendication 1, où ledit système de commande (7) est constitué par un secteur denté (35) pivotant sur ledit châssis et engréné dans une roue dentée (8) fixée à la partie inférieure dudit arbre (6), accouplé à une came (41) qui commande la rotation alternée et les pauses relatives du secteur denté.

4. Dispositif selon la revendication 3, où le profile (40) de la came (41) s'appuie sur le plan perpendiculaire au plan sur lequel s'appuie le secteur denté (35), auquel est accouplé un galet (39) qui coulisse sur ce profil (40).

5. Dispositif selon la revendication 4, comprenant un micro-interrupteur de proximité (50) prévu pour désactiver le dispositif; ce micro-interrupteur est activé par le déplacement de la tige (51) d'un élément en forme de coin (52) introduit élastiquement dans un petit chariot (53) à l'intérieur duquel est engagé l'axe (38) dudit galet (39) qui est en mesure de se déplacer perpendiculairement au plan dudit profil (40) au cas où la rotation dudit support longitudinal (14) ait été entravée pendant la rotation dudit secteur denté (35).

## Patentansprüche

1. Transfervorrichtung für Werkstücke, insbesondere für metallene Schlüssel, von einer ersten Einlegestation zu einer zweiten, eckig zur Einlegestation angeordneten Bearbeitungs- und Entnahmestation, bestehend aus einem. Revolverkopf (1) gelagert auf einem Rahmen (2) und bestehend aus einem sich um eine rechtwinklig zur Transferebene angeordnete Achse (A) drehenden rohrförmigen Teil (4), wobei in genanntem rohrförmigen Teil eine sich mittels eines Steuersystems (7) drehende Welle (6) untergebracht ist, an deren oberen Ende ein Zahnrad (10) befestigt ist, das in eine verschiebbare Zahnstange (11) eingreift; einem Schlitten (13), der mit der Zahnstange verbunden ist und sich an einem mit genanntem rohrförmigen Teil (4) festverbundenen Führungslängslager (14) entlang bewegt, auf dem Pufferelemente (15) und (16) fest angebracht sind, welche den Weg der genannten Zahnstange (11) begrenzen, wobei sich genannter Schlitten (13) zwischen zwei äussersten Stellungen bewegen kann, entsphrechend der Ausfahrbegrenzung der Zahnstange, und zwar eine maximale radiale Rückzugsstellung, in der während des Betriebs eine am äusseren radialen Ende des genannten Schlittens angeordnete Einspannvorrichtung (17) den genannten Schlüssel (5) aus der genannten Einlegestation (25) aufnimmt und eine maximale radiale Vorlaufstellung, in welcher der genannte Schlüssel (5) während des Betriebs in einen Bereich, genannt Bearbeitungs- und Entnahmestation (26), überführt wird, wo der genannte Schlitten (13) während des Betriebs erneut genannte maximale radiale Rückzugsstellung annimmt, um den genannten Schlüssel (5) zu einer Auswurfsrutsche (27) zu befördern, sobald sich die Einspannvorrichtung (17) geöffnet hat, wobei der genannte rohrförmige Teil (4) mit genanntem Rahmen mittels einer elastischen Vorrichtung verbunden ist, welche genanntem Längslager (14) genügend Drehmoment verleiht, um ihm die Drehung von genannter ersten Station zu genannter zweiten Station zu gestatten, und zwar in Übereinstimmung und gleichzeitig mit der Drehung in dieselbe Richtung des genannten Zahnrads (10), dessen gesamter Drehwinkel, in eine der beiden Richtungen, der Summe des für die Verstellung des genannten Längslagers (14) von einer der genannten Stationen zur anderen notwendigen Drehwinkels und des für die Verstellung des genannten Schlittens (13) von einer in die andere der genannten äussersten Stellungen notwendigen Drehwinkels entspricht.

2. Vorrichtung nach Anspruch 1, dadurch gekennzeichnet, dass die genannte Einspannvorrichtung (17) besteht aus einer mit genanntem Schlitten (13) festverbundenen, feststehenden Zange (17a) und aus einer mit demselben Schlitten drehbar verbundenen, beweglichen Zange (17b), welche die Aufgabe haben, genannten Schlüssel (5) quer an dessen seitlichen Rändern festzuklemmen, wobei genannte Zangen parallel zu genannter Transferebene angeordnet sind, wobei genannte Transferebene durch eine kreisbogenförmig ausgelegte Auflageplattform für genannten Schlüssel (5) begrenzt ist, welche genannte Stationen verbindet und während der Drehung des genannten Längslagers (14) von der genannten ersten zur genannten zweiten Station und imgekehrt unter der genannten Einspannvorrichtung angeordnet ist.

3. Vorrichtung nach Anspruch 1, dadurch gekennzeichnet, dass genanntes Steuersystem (7) besteht aus einem Zahnbogen (35), der mit genanntem Rahmen drehbar verbunden ist und in ein am unteren Ende der genannten Welle (6) verkeiltes Ritzel (8) eingreift, wobei genennte Welle mit einem Steuernocken (41) gekupplet ist, wodurch eine wechselweise Drehbewegung und die entsprechenden Pausen des Zahnbogens verursacht werden.

4. Vorrichtung nach Anspruch 3, dadurch gekennzeichnet, dass das Profil (40) des Nockens (41) auf einer zur Auflageebene des genannten Zahnbogens (35) im rechten Winkel angeordneten Ebene aufliegt, wobei an genannten Zahnbogen eine Rolle (39) gekuppelt ist, welche auf genanntem Profil (40) verschiebbar ist.

5. Vorrichtung nach Anspruch 4, dadurch gekennzeichnet, dass ein Mikro-Annäherungsschalter vorhanden ist, der die Aufgabe hat, die Vorrichtung auszuschalten, wobei dieser Schalter durch die Verschiebung des Schafts (51) eines elastisch in eine Bohrung eines kleinen Schlittens (53), eingefügten keilförmigen Teils (52) ausgelöst wird, wobei im Inneren des genannten kleinen Schlittens der Schaft der genannten Rolle (39) untergebracht ist, welche im rechten Winkel zur Ebene des genannten Profils (40) verschiebbar ist, falls die Drehung des genannten Längslagers (14) während der Drehung des genannten Zahnbogens (35) verhindert ist.

FIG1

FIG2

FIG 3

FIG4

FIG5

FIG6

FIG7

FIG8

FIG9

4